# EUROPEAN PATENT APPLICATION

(11) **EP 4 506 374 A1**
(43) Date of publication of application: **12.02.2025**
(21) Application number: 23807513.9
(22) Date of filing: 10.05.2023
(51) Int. Cl.: C08F 210/00, C08L 23/08, C08L 67/02

(54) **POLYOLEFIN COPOLYMER, RESIN PELLETS, MODIFIER FOR ENGINEERING PLASTIC, ENGINEERING PLASTIC COMPOSITION, AND RESIN MOLDED BODY**

(30) Priority: 19.05.2022 JP 2022082276
(71) Applicant: Sumitomo Chemical Company, Limited, Tokyo 103-6020 (JP)
(72) Inventor: KITAGAWA, Sho, Ichihara-shi, Chiba 299-0195 (JP)
(74) Representative: Vossius & Partner Patentanwälte Rechtsanwälte mbB
(86) International application number: PCT/JP2023/017562
(87) International publication number: WO 2023/223909

(57) **Abstract**

A polyolefin copolymer has a main chain including a monomer unit A derived from an olefin monomer having 2 to 8 carbon atoms and a monomer having a glycidyl group unit B, wherein the main chain may further include a monomer unit C derived from a (meth)acrylic acid ester or vinyl ether, and wherein, based on a mass of the olefin copolymer, a proportion of the monomer unit A is 94 mass% or more, and a total proportion of the monomer unit B and the monomer unit C is less than 6 mass%.

## Description

### Technical Field

The present disclosure relates to a polyolefin copolymer, a resin pellet, a modifier for an engineering plastic, an engineering plastic composition and a resin molded body.

### Background Art

In the related art, modifiers that are added to engineering plastics and improve or modify various properties of the engineering plastics are known. For example, Patent Literature 1 discloses a resin composition including (A) 5 to 95 parts by mass of a polyphenylene ether resin or a mixture of the resin and a polystyrene resin, (B) 95 to 5 parts by mass of a saturated polyester, and (C) 1 to 100 parts of a graft-modified polyolefin resin obtained by preparing an aqueous suspension containing (a) 100 parts of a polyolefin resin, (b) 0.1 to 30 parts of a compound represented by a predetermined formula, or the compound, and glycidyl methacrylate, or a modifying agent composed of glycidyl methacrylate, (c) 0.1 to 500 parts of a vinyl monomer, and (d) 0.001 to 10 parts of a radical polymerization initiator with respect to a total amount of 100 parts of (b) and (c), impregnating (b) and (c) in the aqueous suspension into (a), and performing polymerization with respect to 100 parts of (A) and (B).

### Citation List

### Patent Literature

[Patent Literature 1] Japanese Unexamined Patent Publication No H8-259798

### Summary of Invention

### Technical Problem

One aspect of the present disclosure relates to a polyolefin copolymer that, when used as an engineering plastic modifier, can provide an engineering plastic composition having a low dielectric constant and a low dielectric tangent.

### Solution to Problem

In some aspects of the present disclosure, the following [1] to [14] are provided.
[1] A polyolefin copolymer having a main chain including a monomer unit A derived from an olefin monomer having 2 to 8 carbon atoms and a monomer unit B having a glycidyl group,
   wherein the main chain may further include a monomer unit C derived from a (meth)acrylic acid ester or vinyl ether, and
   wherein, based on a mass of the polyolefin copolymer, a proportion of the monomer unit A is 94 mass% or more, and a total proportion of the monomer unit B and the monomer unit C is less than 6 mass%.
[2] The polyolefin copolymer according to [1],
   wherein the monomer unit A is a monomer unit derived from ethylene, a monomer unit derived from an α-olefin, or a combination thereof.
[3] The polyolefin copolymer according to [1],
   wherein the monomer unit A is a monomer unit derived from ethylene.
[4] The polyolefin copolymer according to any one of [1] to [3],
   wherein the monomer unit B is a monomer unit derived from an unsaturated carboxylic acid glycidyl ester, a monomer unit derived from a glycidyl ether having an unsaturated group, or a combination thereof.
[5] The polyolefin copolymer according to any one of [1] to [3],
   wherein the monomer unit B is a monomer unit derived from glycidyl (meth)acrylate.
[6] The polyolefin copolymer according to any one of [1] to [5],
   wherein a proportion of the monomer unit B based on the mass of the polyolefin copolymer is 1 mass% or more.
[7] The polyolefin copolymer according to any one of [1] to [5],
   wherein a proportion of the monomer unit C based on the mass of the polyolefin copolymer is less than 1 mass%.
[8] A resin pellet including the polyolefin copolymer according to any one of [1] to [7].
[9] A modifier for an engineering plastic including the polyolefin copolymer according to any one of [1] to [7].
[10] An engineering plastic composition, including:
   the polyolefin copolymer according to any one of [1] to [7]; and
   an engineering plastic.
[11] The engineering plastic composition according to [10] is substantially free of a polyethylene terephthalate resin.
[12] A resin molded body including the engineering plastic composition according to [10] or [11].
[13] The resin molded body according to [12] is a part of an automobile component.
[14] The resin molded body according to [12] is a part of an electric or electronic component.

### Advantageous Effects of Invention

According to the present disclosure, it is possible to provide a polyolefin copolymer that, when used as an engineering plastic modifier, can provide an engineering plastic composition having a low dielectric constant and a low dielectric tangent.

### Description of Embodiments

Hereinafter, some examples of the present disclosure will be described in detail. However, the present disclosure is not limited to the following examples.

An example of a polyolefin copolymer is a copolymer having a main chain including a monomer unit A derived from an olefin monomer having 2 to 8 carbon atoms and a monomer unit B having a glycidyl group. This polyolefin copolymer may be used as a resin pellet (resin composition) containing a polyolefin copolymer or may be used as a modifier for an engineering plastic and the like.

The monomer unit A derived from an olefin monomer having 2 to 8 carbon atoms may be a monomer unit derived from ethylene, a monomer unit derived from an α-olefin, or a combination thereof or may be a monomer unit derived from ethylene. Examples of α-olefins include linear olefins such as 1-butene, 1-pentene, 1-hexene, 1-heptene, and 1-octene; cyclic olefins such as norbornene, 5-methylnorbomene, and 1-methylnorbornene; and aromatic olefins such as styrene, methylstyrene, and divinylbenzene.

A proportion of the monomer unit A (or a total proportion of the monomer unit derived from ethylene and the monomer unit derived from an α-olefin) based on the mass of the polyolefin copolymer is 94 mass% or more, and may be 95 mass% or more, 96 mass% or more, 97 mass% or more, or 97.5 mass% or more. The proportion of the monomer unit A (or the total proportion of the monomer unit derived from ethylene and the monomer unit derived from an α-olefin) based on the mass of the polyolefin copolymer may be 99.9 mass% or less, 99 mass% or less, 98.5 mass% or less, or 98 mass% or less. The proportion of the monomer unit A (or the total proportion of the monomer unit derived from ethylene and the monomer unit derived from an α-olefin) based on the mass of the polyolefin copolymer may be 94 to 99.9 mass% or 95 to 99 mass%.

The monomer unit B derived from a monomer having a glycidyl group may be a monomer unit derived from an unsaturated carboxylic acid glycidyl ester, a monomer unit derived from a glycidyl ether having an unsaturated group, or a combination thereof, and may be a monomer unit derived from an unsaturated carboxylic acid glycidyl ester. The monomer unit B is present at least in the main chain of the polyolefin copolymer. The monomer unit B may not necessarily be present at the end of the polyolefin copolymer.

The unsaturated carboxylic acid glycidyl ester from which the monomer unit B is derived may be a compound represented by the following Formula (1). In Formula (1), R¹ is an alkenyl group having 2 to 18 carbon atoms, and the alkenyl group may have one or more substituents. Examples of compounds represented by Formula (1) include glycidyl acrylate, glycidyl methacrylate, and itaconic acid glycidyl ester.

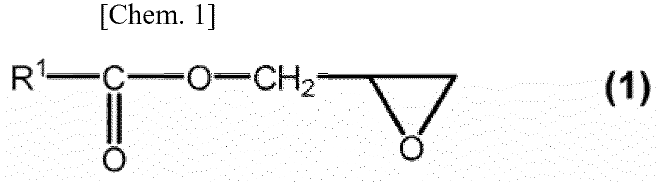

The glycidyl ether having an unsaturated group from which the monomer unit B is derived may be a compound represented by the following Formula (2). In Formula (2), R² is an alkenyl group having 2 to 18 carbon atoms, and the alkenyl group may have one or more substituents. X is CH₂-O (CH₂ is bonded to R²) or an oxygen atom. Examples of compounds represented by Formula (2) include allyl glycidyl ether, 2-methylallyl glycidyl ether, and styrene-p-glycidyl ether.

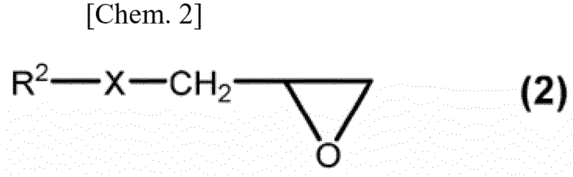

A proportion of the monomer unit B based on the mass of the polyolefin copolymer may be 0.1 mass% or more, 0.5 mass% or more, 1 mass% or more, 1.5 mass% or more, 2 mass% or more, 2.1 mass% or more, 2.2 mass% or more, or 2.3 mass% or more. The proportion of the monomer unit B based on the mass of the polyolefin copolymer may be less than 6 mass%, 5.5 mass% or less, 5.3 mass% or less, 5 mass% or less, 4 mass% or less, 3.5 mass% or less, 3 mass% or less, 2.5 mass% or less, 2.4 mass% or less, 2.3 mass% or less, or 2.2 mass% or less. The proportion of the monomer unit B based on the mass of the polyolefin copolymer may be 0.1 mass% or more and less than 6 mass%, 0.5 to 5.5 mass%, 1 to 5.5 mass%, 1.5 to 5.5 mass%, 2 to 5.5 mass%, or 2.2 to 5.3 mass%.

A mass ratio of the monomer unit B to the monomer unit A (the proportion of the monomer unit B/the proportion of the monomer unit A) may be 0.001 or more, 0.005 or more, 0.01 or more, 0.015 or more, or 0.02 or more. The mass ratio of the monomer unit B to the monomer unit A (the proportion of the monomer unit B/the proportion of the monomer unit A) may be 0.06 or less, 0.05 or less, 0.04 or less, 0.03 or less, or 0.025 or less. The mass ratio of the monomer unit B to the monomer unit A (the proportion of the monomer unit B/the proportion of the monomer unit A) may be 0.001 to 0.06 or 0.005 to 0.05.

The main chain of the polyolefin copolymer may or may not further contain a monomer unit C derived from a (meth)acrylic acid ester or vinyl ether (excluding those corresponding to the monomer unit B). "(Meth)acrylate" is acrylate or methacrylate, and the same applies for similar compounds.

Examples of (meth)acrylic acid esters include methyl (meth)acrylate, ethyl (meth)acrylate, propyl (meth)acrylate, and butyl (meth)acrylate. Examples of vinyl ethers include methyl vinyl ether, ethyl vinyl ether, propyl vinyl ether, and phenyl vinyl ether.

A proportion of the monomer unit C based on the mass of the polyolefin copolymer may be 3 mass% or less, 2 mass% or less, 1 mass% or less, less than 1 mass%, 0.5 mass% or less, 0.1 mass% or less, 0.05 mass% or less, or 0.01 mass% or less. The proportion of the monomer unit C based on the mass of the polyolefin copolymer may be 0 mass%.

A total proportion of the monomer unit B and the monomer unit C based on the mass of the polyolefin copolymer is less than 6 mass%, and may be 5.5 mass% or less, 5.3 mass% or less, 5 mass% or less, 4.5 mass% or less, 4 mass% or less, 3.5 mass% or less, 3 mass% or less, 2.7 mass% or less, 2.5 mass% or less, 2.4 mass% or less, 2.3 mass% or less, or 2.2 mass% or less. The total proportion of the monomer unit B and the monomer unit C based on the mass of the polyolefin copolymer may be 0.1 mass% or more, 0.5 mass% or more, 1 mass% or more, 1.5 mass% or more, 1.8 mass% or more, 2 mass% or more, 2.1 mass% or more, 2.2 mass% or more, or 2.3 mass% or more. The total proportion of the monomer unit B and the monomer unit C based on the mass of the polyolefin copolymer may be 0.1 mass% or more and less than 6 mass%, 0.5 to 5.5 mass%, 1 to 5.5 mass%, 1.5 to 5.5 mass%, 2 to 5.5 mass%, or 2.2 to 5.3 mass%.

A mass ratio of the monomer unit C to the monomer unit B (the proportion of the monomer unit C/the proportion of the monomer unit B) may be 0.1 or less, 0.05 or less, or 0.01 or less. The mass ratio of the monomer unit C to the monomer unit B (the proportion of the monomer unit C/the proportion of the monomer unit B) may be 0.

Examples of polyolefin copolymers include ethylene-glycidyl (meth)acrylate copolymers, ethylene-glycidyl (meth)acrylate-methyl (meth)acrylate copolymers, ethylene-glycidyl (meth)acrylate-ethyl (meth)acrylate copolymers, ethylene-glycidyl (meth)acrylate-n-propyl (meth)acrylate copolymers, ethylene-glycidyl (meth)acrylate-isopropyl (meth)acrylate copolymers, ethylene-glycidyl (meth)acrylate-n-butyl (meth)acrylate copolymers, ethylene-glycidyl (meth)acrylate-isobutyl (meth)acrylate copolymers, and ethylene-glycidyl (meth)acrylate-vinyl ether copolymers. The polyolefin copolymer may be an ethylene-glycidyl (meth)acrylate copolymer.

Polyolefin copolymers can be synthesized by various methods. The polyolefin copolymer can be produced, for example, by bulk polymerization, emulsion polymerization, solution polymerization or the like using a free radical initiator. An example of a typical polymerization method for synthesizing polyolefin copolymers is a method in which, in the presence of a polymerization initiator that generates free radicals, under conditions of a polymerization pressure of 500 kg/cm² or more and a polymerization temperature of 40 to 300°C, an olefin monomer having 2 to 8 carbon atoms, a monomer having a glycidyl group, and as necessary, a (meth)acrylic acid ester or a vinyl ether are copolymerized. The polymerization pressure may be 1,000 kg/cm² or more or 2,000 kg/cm² or less. The polymerization temperature may be 100 to 250°C or 150 to 200°C. Since an olefin monomer having 2 to 8 carbon atoms, a monomer having a glycidyl group, and as necessary, a (meth)acrylic acid ester or vinyl ether are randomly copolymerized, at least the olefin monomer having 2 to 8 carbon atoms and the monomer having a glycidyl group are present in the main chain.

The melt flow rate (MFR) of the polyolefin copolymer may be 0.2 g/10 min or more, 0.5 g/10 min or more, 1 g/10 min or more, 1.5 g/min or more, 2 g/10 min or more, 2.5 g/10 min or more, 3 g/10 min or more, 5 g/10 min or more, 10 g/10 min or more, 20 g/10 min or more, 30 g/10 min or more, 40 g/10 min or more, or 43 g/10 min or more. The melt flow rate (MFR) of the polyolefin copolymer may be 300 g/10 min or less, 250 g/10 min or less, 220 g/10 min or less, 200 g/10 min or less, 190 g/10 min or less, 170 g/10 min or less, 150 g/10 min or less, 130 g/10 min or less, 110 g/10 min or less, 100 g/10 min or less, 90 g/10 min or less, or 85 g/10 min or less. The MFR of the polyolefin copolymer can be measured according to JIS K 7210 under conditions of a temperature of 190°C and a load 2.16 kgf.

In order to easily obtain an engineering plastic composition having a low dielectric constant, the dielectric constant of the polyolefin copolymer may be 2.55 or less, 2.50 or less, 2.47 or less, 2.45 or less, or 2.43 or less. The dielectric constant of the polyolefin copolymer may be 2.0 or more, 2.2 or more or 2.3 or more. The dielectric constant of the polyolefin copolymer may be 2.0 to 2.55, 2.2 to 2.50, or 2.3 to 2.47. The dielectric constant of the polyolefin copolymer can be measured by the method described in examples to be described below.

In order to easily obtain an engineering plastic composition having a particularly low dielectric tangent, the dielectric tangent of the polyolefin copolymer may be 0.012 or less, 0.010 or less, 0.0095 or less, 0.0080 or less, 0.0070 or less, 0.0060 or less, or 0.0055 or less. The dielectric tangent of the polyolefin copolymer may be 0.001 or more, 0.002 or more, 0.003 or more, or 0.004 or more. The dielectric tangent of the polyolefin copolymer may be 0.001 to 0.012, 0.002 to 0.010, or 0.003 to 0.0095. The dielectric tangent of the polyolefin copolymer can be measured by the method described in examples to be described below.

The content of the polyolefin copolymer based on the total mass of the resin pellet may be 80 mass% or more, 85 mass% or more, 90 mass% or more or 95 mass% or more. The content of the polyolefin copolymer based on the total mass of the resin pellet may be 100 mass%.

The resin pellet may further contain additives such as a compatibilizer, an antioxidant, a heat stabilizer, a UV absorber, a coloring inhibitor, a plasticizer, a flame retardant, a plasticizer, a release agent, an antistatic agent, and a colorant.

The resin pellet can be obtained, for example, by a method including melt-kneading a mixture containing a polyolefin copolymer and an additive added as necessary.

The melt-kneading can be performed using, for example, a twin-screw kneader or a Labo Plastomill. Examples of twin-screw kneaders include a co-rotation twin-screw extruder.

The maximum temperature of the mixture to be melt-kneaded may be 50 to 350°C, 80 to 320°C, 100 to 300°C, 120 to 280°C, or 150 to 250°C.

The kneading time for melt-kneading may be 1 second to 1,800 seconds, 10 seconds to 1,200 seconds, or 30 seconds to 600 seconds.

For example, the resin pellet can be used as a modifier for an engineering plastic in order to improve various properties (for example, impact resistance) of the engineering plastic. The engineering plastic composition containing an engineering plastic and a polyolefin copolymer (or a modifier) can be obtained, for example, by a method including melt-kneading a mixture containing a polyolefin copolymer (or a modifier) and an engineering plastic. The engineering plastic composition may contain a continuous phase containing an engineering plastic and particles containing a polyolefin copolymer dispersed in a continuous phase.

The engineering plastic is a plastic in which the temperature of deflection under load measured according to ASTM D648 standard is 100°C or higher, the tensile strength measured according to ASTM D638 standard is 50 MPa, and the bending elastic modulus measured according to ASTM D790 standard is 2.4 GPa or more. Plastics with a heat resistance of 150°C or higher are called special engineering plastics, or super engineering plastics, and in this specification, the engineering plastics include special engineering plastics and super engineering plastics.

Examples of engineering plastics include polybutylene terephthalate (PBT), polyphenylene sulfide (PPS), polycarbonates, polyethylene terephthalate, liquid crystal polymers, polyethersulfone, polyamides, polyphthalamide, polyketone, polyetherketone, polyetheretherketone, polyacetal, and polysulfone. The engineering plastic composition may be substantially free of a polyethylene terephthalate resin, and the content of polyethylene terephthalate based on the mass of the engineering plastic in the engineering plastic composition may be less than 1 mass%. The polyethylene terephthalate resin here also includes a modified article in which some of the monomer units derived from terephthalic acid are replaced with monomer units derived from a dicarboxylic acid other than terephthalic acid.

The engineering plastic composition may further contain other components such as a resin component (excluding those corresponding to the polyolefin copolymer), a filler, an antioxidant, a heat stabilizer, a UV absorber, a coloring inhibitor, a plasticizer, a flame retardant, a plasticizer, a release agent, an antistatic agent and a colorant, which are added separately from the polyolefin copolymer (or modifier).

The resin component may be an olefin copolymer having no epoxy group. The olefin copolymer may be an ethylene-α-olefin copolymer having a monomer unit derived from ethylene and a monomer unit derived from an α-olefin. Examples of olefin copolymers having no epoxy group include ethylene-1-butene copolymers, ethylene-1-hexene copolymers, ethylene-1-octene copolymers, ethylene-1-decene copolymers, and ethylene-(3-methyl-1-butene)copolymers.

The MFR of the resin component at a temperature of 190°C and a load of 2.16 kgf may be 0.1 g/10 min or more, 0.5 g/10 min or more, or 1 g/10 min or more, and may be 50 g/10 min or less, 20 g/10 min or less, or 10 g/10 min or less.

The density of the resin component may be 0.85 g/cm³ or more, 0.87 g/cm³ or more, or 0.89 g/cm³ or more, and may be 0.95 g/cm³ or less, 0.92 g/cm³ or less, or 0.90 g/cm³ or less.

The dielectric constant of the engineering plastic composition may be 2.96 or less, 2.95 or less, 2.94 or less, 2.93 or less, or 2.92 or less. The dielectric constant of the engineering plastic composition may be 2.0 or more, 2.2 or more, 2.3 or more, 2.4 or more, 2.5 or more, 2.6 or more, 2.7 or more, 2.8 or more, or 2.9 or more. The dielectric constant of the engineering plastic composition may be 2.0 to 2.96, 2.2 to 2.96, or 2.3 to 2.96. The dielectric constant of the engineering plastic composition can be measured by the method described in examples to be described below.

The dielectric tangent of the engineering plastic composition may be 0.0060 or less, 0.0059 or less, 0.0058 or less, 0.0057 or less, 0.0056 or less, or 0.0055 or less. The dielectric tangent of the engineering plastic composition may be 0.001 or more, 0.002 or more, 0.003 or more, 0.004 or more, or 0.005 or more. The dielectric tangent of the engineering plastic composition may be 0.001 to 0.0060 or 0.002 to 0.0059. The dielectric tangent of the engineering plastic composition can be measured by the method described in examples to be described below.

The MFR retention rate of the engineering plastic composition may be 50% or more, 70% or more, or 90% or more. The MFR retention rate of the engineering plastic composition may be 150% or less, 130% or less, 120% or less, or 110% or less. The MFR retention rate of the engineering plastic composition may be 50 to 150%, 70 to 130%, or 90 to 120%. The MFR retention rate of the engineering plastic composition is a rate of change in the MFR of the engineering plastic composition after storage for 1 month to 6 months in a room temperature environment relative to the MFR immediately after the engineering plastic composition is produced (MFR of the engineering plastic composition after storage/MFR of the engineering plastic composition before storage), and can be measured by the method described in examples to be described below.

The Izod impact strength of the engineering plastic composition at -30°C may be 2.8 kJ/m² or more, 2.9 kJ/m² or more, 3.0 kJ/m² or more, or 3.1 kJ/m² or more. The Izod impact strength of the engineering plastic composition at -30°C may be 5.0 kJ/m² or less, 4.0 kJ/m² or less, or 3.5 kJ/m² or less. The Izod impact strength of the engineering plastic composition at -30°C may be 2.8 to 5.0 kJ/m², 2.8 to 4.0 kJ/m², or 2.8 to 3.5 kJ/m². The Izod impact strength of the engineering plastic composition at -30°C can be measured by the method described in examples to be described below.

The bending strength of the engineering plastic composition may be 74 MPa or more or 75 MPa or more. The bending strength of the engineering plastic composition may be 90 MPa or less or 80 MPa or less. The bending strength of the engineering plastic composition may be 74 to 90 MPa or 75 to 80 MPa. The bending strength of the engineering plastic composition can be measured by the method described in examples to be described below.

The bending elastic modulus of the engineering plastic composition may be 2,050 MPa or more or 2,100 MPa or more. The bending elastic modulus of the engineering plastic composition may be 2,300 MPa or less or 2,200 MPa or less. The bending elastic modulus of the engineering plastic composition may be 2,050 to 2,300 MPa or 2,050 to 2,200 MPa. The bending elastic modulus of the engineering plastic composition can be measured by the method described in examples to be described below.

The heat deflection temperature (HDT) of the engineering plastic composition may be 59.5°C or higher or 60°C or higher. The HDT of the engineering plastic composition may be 80°C or lower, 70°C or lower, or 65°C or lower. The HDT of the engineering plastic composition may be 59.5 to 80°C or 60 to 70°C. The HDT of the engineering plastic composition can be measured by the method described in examples to be described below.

The content of the polyolefin copolymer based on the total mass of the engineering plastic composition may be 1 mass% or more, 3 mass% or more, or 5 mass% or more. The content of the polyolefin copolymer based on the total mass of the engineering plastic composition may be 50 mass% or less, 40 mass% or less, 30 mass% or less, 20 mass% or less, or 10 mass% or less. The content of the polyolefin copolymer based on the total mass of the engineering plastic composition may be 1 to 50 mass%.

The content of the engineering plastic based on the total mass of the engineering plastic composition may be 50 mass% or more, 60 mass% or more, 70 mass% or more, or 80 mass% or more. The content of the engineering plastic based on the total mass of the engineering plastic composition may be 95 mass% or less or 90 mass% or less. The content of the engineering plastic based on the total mass of the engineering plastic composition may be 50 to 95 mass%.

The engineering plastic composition can be molded by any molding method such as an injection molding method, an extrusion molding method, and vacuum molding and blow molding methods to obtain a resin molded body of the engineering plastic composition. The obtained resin molded body has a low dielectric constant and a low dielectric tangent, and may be, for example, a part of an automobile component or a part of an electric or electronic component.

### [Examples]

Hereinafter, the present invention will be described in detail with reference to examples. However, the present disclosure is not limited to the following examples.

### 1. Raw materials

In order to prepare a polybutylene terephthalate resin composition, the following raw materials were prepared. A polyolefin copolymer, an engineering plastic and other resin components were each prepared as resin pellets.

### (A) Polyolefin copolymer

·BF-2C (product name, commercially available from Sumitomo Chemical Co., Ltd., random copolymer of 94 parts by mass of ethylene and 6 parts by mass of glycidyl methacrylate, MFR=3 g/10 min, polymerization pressure: 1,346 kg/cm², polymerization temperature: 194°C)
·BF-7L (product name, commercially available from Sumitomo Chemical Co., Ltd., random copolymer of 70 parts by mass of ethylene, 3 parts by mass of glycidyl methacrylate, and 27 parts by mass of methyl acrylate, MFR=7 g/10 min, polymerization pressure: 1,804 kg/cm², polymerization temperature: 191°C)
·EGMA-1 (random copolymer of 97.8 parts by mass of ethylene and 2.2 parts by mass of glycidyl methacrylate, MFR=3 g/10 min, polymerization pressure: 1,356 kg/cm², polymerization temperature: 196°C)
·EGMA-2 (random copolymer of 97.7 parts by mass of ethylene and 2.3 parts by mass of glycidyl methacrylate, MFR=43 g/10 min, polymerization pressure: 1,356 kg/cm², polymerization temperature: 195°C)
·EGMA-3 (random copolymer of 97.7 parts by mass of ethylene and 2.3 parts by mass of glycidyl methacrylate, MFR=85 g/10 min, polymerization pressure: 1,356 kg/cm², polymerization temperature: 195°C)
·EGMA-4 (random copolymer of 97.7 parts by mass of ethylene and 2.3 parts by mass of glycidyl methacrylate, MFR=190 g/10 min, polymerization pressure: 1,356 kg/cm², polymerization temperature: 195°C)
·EGMA-5 (random copolymer of 94.7 parts by mass of ethylene and 5.3 parts by mass of glycidyl methacrylate, MFR=3 g/10 min, polymerization pressure: 1,346 kg/cm², polymerization temperature: 195°C)

### (B) Engineering plastic

·polybutylene terephthalate (PBT): Toraycon 1401 X06 (product name, commercially available from Toray Industries, Inc., intrinsic viscosity: 1.74)

### (C) Other resin components

·EHR: FX201 (product name, commercially available from Sumitomo Chemical Co., Ltd., ethylene-hexene copolymer, MFR=2 g/10 min, density: 0.898 g/cm³)

### 2. Production of molded body A

### (Example 1)

EGMA-1 was heated using a vacuum press machine (IMC-19E6 model, commercially available from Imoto Machinery Co., Ltd.) at 190°C for 10 minutes and then cooled at 30°C for 5 minutes to produce a sheet-like molded body A with a thickness of 1.0 mm.

### (Example 2)

A molded body A was produced in the same manner as in Example 1 except that EGMA-2 was used in place of EGMA-1.

### (Example 3)

A molded body A was produced in the same manner as in Example 1 except that EGMA-3 was used in place of EGMA-1.

### (Example 4)

A molded body A was produced in the same manner as in Example 1 except that EGMA-4 was used in place of EGMA-1.

### (Example 5)

A molded body A was produced in the same manner as in Example 1 except that EGMA-5 was used in place of EGMA-1.

### (Comparative Example 1)

A molded body A was produced in the same manner as in Example 1 except that BF-2C was used in place of EGMA-1.

### (Comparative Example 2)

A molded body A was produced in the same manner as in Example 1 except that BF-7L was used in place of EGMA-1.

### 3. Production of engineering plastic composition and Molded bodies B to D

### (Example 6)

At a hopper port provided in the barrel C1 of a twin-screw extruder (KZW20TW, commercially available from Technovel Corporation), 90 mass% of polybutylene terephthalate (PBT) was fed from the main feeder, and 10 mass% of EGMA-1 was fed from the sub-feeder. The temperature of the nozzle head was set to 260°C, the rotation speed of the screw was set to 300 rpm, and PBT and EGMA-1 were melt-kneaded. The melt-kneaded product was discharged from the twin screw extruder at a discharge rate of 5 kg/hour, and the melt-kneaded product was cut with a pelletizer to obtain resin pellets of the engineering plastic composition containing PBT. These resin pellets were injection-molded using an injection molding machine (SE100EV, commercially available from Sumitomo Heavy Industries) under conditions of a mold temperature of 80°C, a cylinder temperature of 260°C, and an injection speed of 15 mm/sec to produce a sheet-like molded body B with a thickness of 3.2 mm and a sheet-like molded body C with a thickness of 6.4 mm. In addition, the resin pellets were heated and pressed using a vacuum press machine under conditions of 260°C and 10 minutes and then cooled at 30°C for 5 minutes to produce a sheet-like molded body D with a thickness of 1.0 mm.

### (Example 7)

Molded bodies B to D were produced in the same manner as in Example 6 except that EGMA-2 was used in place of EGMA-1.

### (Example 8)

Molded bodies B to D were produced in the same manner as in Example 6 except that EGMA-3 was used in place of EGMA-1.

### (Example 9)

Molded bodies B to D were produced in the same manner as in Example 6 except that EGMA-4 was used in place of EGMA-1.

### (Example 10)

Molded bodies B to D were produced in the same manner as in Example 6 except that EGMA-5 was used in place of EGMA-1.

### (Comparative Example 3)

Molded bodies B to D were produced in the same manner as in Example 6 except that BF-2C was used in place of EGMA-1.

### (Comparative Example 4)

Molded bodies B to D were produced in the same manner as in Example 6 except that BF-7L was used in place of EGMA-1.

### (Comparative Example 5)

Molded bodies B to D were produced in the same manner as in Example 6 except that 93.3 mass% of polybutylene terephthalate (PBT) was fed from the main feeder, and 6.7 mass% of BF-2C was fed from the sub-feeder.

### (Comparative Example 6)

Molded bodies B to D were produced in the same manner as in Example 6 except that 97.5 mass% of polybutylene terephthalate (PBT) was fed from the main feeder, and 2.5 mass% of BF-2C was fed from the sub-feeder.

### (Comparative Example 7)

Molded bodies B to D were produced in the same manner as in Example 6 except that 99 mass% of polybutylene terephthalate (PBT) was fed from the main feeder, and 1 mass% of BF-2C was fed from the sub-feeder.

### 4. Production of engineering plastic composition and molded body E

### (Example 11)

The temperatures of 9 barrels C1 to C9 provided in the extrusion direction from the side of the hopper of the twin-screw extruder were set as follows.
C1: 100°C
C2: 200°C
C3 to C9: 260°C

At a hopper port provided in the barrel C1 of the twin-screw extruder (KZW20TW, commercially available from Technovel Corporation), 80 mass% of PBT was fed from the main feeder, and 5 mass% of EGMA-1 and 15 mass% of FX201 (product name, commercially available from Sumitomo Chemical Co., Ltd., ethylene-hexene copolymer (EHR), MFR=2 g/10 min, density: 0.898 g/cm³) were fed from the sub-feeder. The temperature of the nozzle head was set to 260°C, the rotation speed of the screw was set to 300 rpm, and PBT, EGMA-1 and EHR were melt-kneaded. The melt-kneaded product was discharged from the twin screw extruder, at a discharge rate of 5 kg/hour, the melt-kneaded product was cut with a pelletizer to obtain resin pellets of the engineering plastic composition containing PBT and EHR. These resin pellets were injection-molded using an injection molding machine (SE100EV, commercially available from Sumitomo Heavy Industries) under conditions of a mold temperature of 80°C, a cylinder temperature of 260°C, and an injection speed of 30 mm/sec to produce a sheet-like molded body E with a thickness of 2.0 mm.

### (Example 12)

A molded body E was produced in the same manner as in Example 11 except that EGMA-2 was used in place of EGMA-1.

### (Example 13)

A molded body E was produced in the same manner as in Example 11 except that EGMA-3 was used in place of EGMA-1.

### (Example 14)

A molded body E was produced in the same manner as in Example 11 except that EGMA-4 was used in place of EGMA-1.

### (Comparative Example 8)

A molded body E was produced in the same manner as in Example 11 except that BF-2C was used in place of EGMA-1, the content of BF-2C was changed to 1.7 mass%, and the content of EHR was changed to 18.3 mass%.

### (Comparative Example 9)

A molded body E was produced in the same manner as in Example 11 except that BF-7L was used in place of EGMA-1.

### 5. Evaluation

[Evaluation of dielectric constant and dielectric tangent] Test pieces with a length 64 mm, a width of 64 mm, and a thickness of 1.0 mm were prepared from the molded body A and the molded body D. Using these test pieces, the dielectric constant and the dielectric tangent at 1 GHz were measured in an atmosphere at 23°C by a capacitance method.

### [MFR retention rate]

The resin pellets produced in Examples 6 to 10 or Comparative Examples 3 to 7 were sealed in an aluminum bag, and the resin pellets sealed in the bag were stored in an environment at room temperature for 1 month or longer. The storage period of the resin pellets produced in Examples 6 to 9 and Comparative Example 3 was 6 months, the storage period of the resin pellets produced in Example 10 was 2 months, and the storage period of the resin pellets produced in Comparative Examples 4 to 7 was 1 month. The MFR of the resin pellets (engineering plastic composition) before and after storage was measured using a melt flow tester under conditions of a temperature of 190°C and a load of 2.16 kgf. From the measured MFRs of the engineering plastic composition before and after storage, the rate of change in the MFR of the engineering plastic composition after storage relative to the MFR of the engineering plastic composition before storage was calculated.

### [Izod impact Test]

A notched test piece with a length of 63.5 mm, a width of 12.7 mm, and a thickness of 3.2 mm was produced from the molded body B. Using this test piece, the Izod impact strength (kJ/m²) was measured in an atmosphere of -30°C by an Izod impact Test according to ASTM D-256.

### [Bending test]

A test piece with a length of 127 mm, a width of 12.7 mm, and a thickness of 3.2 mm was produced from the molded body B, and the bending strength (MPa) and the bending elastic modulus (MPa) were measured in an atmosphere of 23°C using a twin bending tester (RTF-1350-2M, commercially available from A&D Co., Ltd.) by a bending test according to JIS-K 7203 (ASTM-D-790).

### [HDT measurement]

A test piece with a length of 127 mm, a width of 12.7 mm, and a thickness of 6.4 mm was produced from the molded body C, and the HDT (°C) was measured according to JIS K 7197-1, 2.

### [Surface peeling test]

In the molded body E, near the resin inlet, 100 squares were cut with a cutter, with each square being 2 mm×2 mm. Cellotape (registered trademark, commercially available from Nichiban Co., Ltd.) was attached to the cut area. The Cellotape was peeled off vigorously, and the number of peeled off squares (the number of peeled sheets) out of 100 squares was measured. The fewer the number of peeled off squares, the better the appearance of the molded body.

**[Table 1]**

| | | Example | | | | | Comparative Example | |
|---|---|---|---|---|---|---|---|---|
| | | 1 | 2 | 3 | 4 | 5 | 1 | 2 |
| Polyolef in copolym er | Proportio n of glycidyl methacryl ate (mass%) | 2.2 | 2.3 | 2.3 | 2.3 | 5.3 | 6.0 | 3.0 |
| | Proportio n of methyl acrylate (mass%) | 0 | 0 | 0 | 0 | 0 | 0 | 27.0 |
| Dielectric constant | | 2.41 | 2.38 | 2.43 | 2.43 | 2.54 | 2.59 | 2.86 |
| Dielectric tangent | | 0.005 03 | 0.004 78 | 0.004 86 | 0.004 78 | 0.009 49 | 0.012 7 | 0.045 6 |

**[Table 2]**

| | | Example | | | | | Comparative Example | |
|---|---|---|---|---|---|---|---|---|
| | | 6 | 7 | 8 | 9 | 10 | 3 | 4 |
| Polyolef in copoly mer | Proportio n of glycidyl methacryl ate (mass%) | 2.2 | 2.3 | 2.3 | 2.3 | 5.3 | 6.0 | 3.0 |
| | Proportio n of methyl acrylate (mass%) | 0 | 0 | 0 | 0 | 0 | 0 | 27.0 |
| PBT content (mass%) | | 90 | 90 | 90 | 90 | 90 | 90 | 90 |
| Dielectric constant | | 2.92 | 2.93 | 2.92 | 2.95 | 2.96 | 2.97 | 2.95 |
| Dielectric tangent | | 0.005 44 | 0.005 39 | 0.005 43 | 0.005 26 | 0.005 83 | 0.006 02 | 0.01 06 |
| MFR retention rate (%) | | 102.8 | 96.7 | 91.9 | 116.1 | 110.6 | 44.8 | 76.6 |
| Izod impact strength (kJ/m²) | | 3.1 | 3.4 | 3.5 | 3.5 | 2.8 | 2.9 | 2.9 |
| Bending strength (MPa) | | 76 | 75 | 75 | 75 | 75 | 73 | 68 |
| Bending elastic modulus (MPa) | | 2110 | 2110 | 2120 | 2130 | 2060 | 2030 | 1900 |
| HDT (°C) | | 61 | 61 | 60 | 60 | 59 | 59 | 57 |

**[Table 3]**

| | | Comparative Example | | |
|---|---|---|---|---|
| | | 5 | 6 | 7 |
| Polyolefin copolymer | Proportion of glycidyl methacrylate (mass%) | 6.0 | 6.0 | 6.0 |
| | Proportion of methyl acrylate (mass%) | 0 | 0 | 0 |
| PBT content (mass%) | | 93.3 | 97.5 | 99 |
| Dielectric constant | | 3.09 | 3.00 | 3.03 |
| Dielectric tangent | | 0.00556 | 0.00551 | 0.00610 |
| MFR retention rate (%) | | 92.5 | 92.6 | 110.1 |
| Izod impact strength (kJ/m²) | | 3.6 | 2.4 | 2.2 |
| Bending strength (MPa) | | 81 | 91 | 93 |
| Bending elastic modulus (MPa) | | 2270 | 2550 | 2600 |
| HDT (°C) | | 61 | 63 | 64 |

**[Table 4]**

| | | Example | | | | Comparative Example | |
|---|---|---|---|---|---|---|---|
| | | 11 | 12 | 13 | 14 | 8 | 9 |
| Polyolefin copolymer | Proportion of glycidyl methacrylate (mass%) | 2.2 | 2.3 | 2.3 | 2.3 | 6.0 | 3.0 |
| | Proportion of methyl acrylate (mass%) | 0 | 0 | 0 | 0 | 0 | 27.0 |
| PBT content (mass%) | | 80 | 80 | 80 | 80 | 80 | 80 |
| EHR content (mass%) | | 15 | 15 | 15 | 15 | 18.3 | 16.7 |
| Number of peeled sheets | | 0 | 0 | 0 | 0 | 4 | 10 |

## Claims

1. A polyolefin copolymer having a main chain comprising a monomer unit A derived from an olefin monomer having 2 to 8 carbon atoms and a monomer unit B having a glycidyl group,
wherein the main chain may further comprise monomer unit C derived from a (meth)acrylic acid ester or vinyl ether, and
wherein, based on a mass of the polyolefin copolymer, a proportion of the monomer unit A is 94 mass% or more, and a total proportion of the monomer unit B and the monomer unit C is less than 6 mass%.

2. The polyolefin copolymer according to claim 1,
wherein the monomer unit A is a monomer unit derived from ethylene, a monomer unit derived from an α-olefin, or a combination thereof.

3. The polyolefin copolymer according to claim 1,
wherein the monomer unit A is a monomer unit derived from ethylene.

4. The polyolefin copolymer according to claim 1,
wherein the monomer unit B is a monomer unit derived from an unsaturated carboxylic acid glycidyl ester, a monomer unit derived from a glycidyl ether having an unsaturated group, or a combination thereof.

5. The polyolefin copolymer according to claim 1,
wherein the monomer unit B is a monomer unit derived from glycidyl (meth)acrylate.

6. The polyolefin copolymer according to claim 1,
wherein a proportion of the monomer unit B based on the mass of the polyolefin copolymer is 1 mass% or more.

7. The polyolefin copolymer according to claim 1,
wherein a proportion of the monomer unit C based on the mass of the polyolefin copolymer is less than 1 mass%.

8. A resin pellet comprising the polyolefin copolymer according to any one of claims 1 to 7.

9. A modifier for an engineering plastic comprising the polyolefin copolymer according to any one of claims 1 to 7.

10. An engineering plastic composition, comprising:
the polyolefin copolymer according to any one of claims 1 to 7; and
an engineering plastic.

11. The engineering plastic composition according to claim 10 is substantially free of a polyethylene terephthalate resin.

12. A resin molded body comprising the engineering plastic composition according to claim 10.

13. The resin molded body according to claim 12 is a part of an automobile component.

14. The resin molded body according to claim 12 is a part of an electric or electronic component.
